# EUROPÄISCHE PATENTANMELDUNG

(11) **EP 0 685 636 A2**
(43) Veröffentlichungstag der Anmeldung: **06.12.1995**
(21) Anmeldenummer: 95106531.7
(22) Anmeldetag: 29.04.1995
(51) Int. Cl.: F01N 3/28

(54) **Verfahren zur Herstellung von Abgaskatalysoren, insbesondere für Kraftfahrzeuge**

(30) Priorität: 02.05.1994 DE 4416055
(71) Anmelder: LEISTRITZ AG & CO. Abgastechnik, D-90765 Fürth (DE)
(72) Erfinder: Stoepler, Walter Dr., D-91074 Herzogenaurach (DE)
(74) Vertreter: Tergau, Enno, Dipl.-Ing.

(57) **Zusammenfassung**

Es wird ein Verfahren zum Herstellen eines Abgaskatalysators mit einem Gehäuse (1) und mehreren darin mit Axialabstand zueinander angeordneten Monolithen (7,8) vorgeschlagen. Um bei der Montage des Abgaskatalysators den Axialabstand (10) zwischen den Monolithen (7,8) einhalten zu können, wird zwischen die Monolithen (7,8) ein Abstandshalter (16) angeordnet, der von einem bei Raumtemperatur festen Zustand in einen flüssigen, gas- oder dampfförmigen Zustand umwandelbar ist.

## Beschreibung

Die Erfindung betrifft ein Verfahren zur Herstellung von Abgas-Katalysatoren, wie sie insbesondere in Kraftfahrzeugen eingebaut sind, mit den im Oberbegriff des Anspruches 1 genannten Merkmalen. Die Gehäuse von Abgaskatalysatoren können entweder aus zwei Schalen bestehen, die nach dem Einbau von Monolithen und Lagerungsmatten an ihren Rand-Verbindungsnähten verschweißt werden oder es sind Gehäuse, die in der sog. Wickelbauweise hergestellt sind. Dabei wird ein Blechband um die mit einer Lagerungsmatte umhüllten Monolithen gewickelt und in Längsrichtung verschweißt. Auf die Stirnseiten des so entstandenen Gehäuserohres werden dann Trichter aufgesetzt. Bei einer dritten Gehäuseart schließlich dient ein Rohrabschnitt als Gehäusekörper. In diesen Rohrabschnitt werden die mit einer Lagerungsmatte umhüllten Monolithe eingeschoben und anschließend auf die Stirnseiten des Rohrabschnitts Ein- und Auströmtrichter aufgesetzt.

Während bei der Halbschalenbauweise der Nachteil besteht, daß für unterschiedliche Monolithen-Baulängen auch entsprechend bemessene Halbschalen gefertigt werden müssen, sind die Gehäuse nach der Wickel- und Rohrbauweise unabhängig von der Monolithlänge.

Monolithe sind Keramikkörper, die in Axialrichtung von einer Vielzahl von Durchgangskanälen durchzogen sind. Diese Durchgangskanäle sind mit einer katalytisch wirksamen Substanz beschichtet. Wenn größere Katalysator-Wirkvolumina in einem Abgaskatalysator benötigt werden, ist es allgemein üblich, mehrere Monolithen im Katalysatorgehäuse anzuordnen. Es wäre theoretisch auch denkbar, einen einzigen Monolithen mit entsprechender Baugröße zu verwenden, die Herstellung solcher großer Keramikkörper ist aber sehr aufwendig, so daß in der Regel die gewünschten Katalysator-Wirkvolumina durch Hintereinanderschalten von mehreren Monolithen erzeugt werden. Bei der Anordnung mehrerer Monolithe in einem Gehäuse tritt unabhängig von der Gehäusebauweise das Problem auf, daß die Monolithe mit Axialabstand zueinander angeordnet sein müssen. Ein solcher Axialabstand bzw. ein durch die sich einander zugewandten Stirnseiten zweier Monolithe und der Gehäusewandung gebildeter Zwischenraum ist aus folgenden Gründen notwendig und auch gewünscht: Zum einen würden aneinanderliegende Stirnseiten der Monolithen durch im Fahrbetrieb von Kraftfahrzeugen auftretende Vibrationen aneinanderreiben. Dies würde die Gefahr in sich bergen, daß Teilchen von dem keramischen Monolithen abgebrochen bzw. abgerieben werden könnten. Diese Abriebteilchen könnten sich u.U. in den Durchgangskanälen der nachfolgenden Monolithen festsetzen. Bei einer abstandsfreien Anordnung müßten die Monolithen auch so angeordnet sein, daß die Durchgangskanäle des ersten Monolithen mit jenen des nachfolgenden Monolithen vollständig in Überdeckung stehen, was in der Praxis nur schwer zu erreichen wäre. Der Zwischenraum dient auch dazu, zwischen zwei hintereinander angeordneten Monolithen einen Sensor für die Steuerung des Abgaskatalysators anzuordnen. Schließlich ist der Zwischenraum auch deshalb erwünscht, weil sich in ihm die laminare Strömung der Abgase in eine turbulende Strömung umwandelt. Im stromaufwärts angeordneten Monolithen stellt sich nämlich in dessen Strömungskanälen bereits nach wenigen Millimetern eine laminare Strömung ein. Der Stoffaustausch in Radialrichtung der Strömungskanäle, d.h. also zwischen der katalytisch beschichteten Oberfläche der Strömungskanäle und dem Abgasstrom, ist dabei geringer als dies bei einer turbulenten Strömung der Fall wäre. Im Zwischenraum stellt sich wieder ein den Wirkungsgrad des Katalysators erhöhender, mehr turbulenter Strömungszustand ein.

Um bei der Montage eines Abgaskatalysators den gewünschten Axialabstand einhalten zu können, ist es bei in Halbschalenbauweise hergestellten Gehäusen bekannt, zwischen zwei aufeinanderfolgende Monolithe einen ringförmigen, aus Pappe bzw. Pappkarton bestehenden Abstandshalter anzuordnen. Dies hat folgende Nachteile: Der aus Pappe bestehende Abstandshalter wird bei der Erstausstattung während der ersten Testläufe noch im Herstellungswerk aufgrund der im Katalysator herrschenden Betriebstemperatur verbrannt. Wegen des Sauerstoffunterschusses im Abgas erfolgt diese Verbrennung naturgemäß unter relativ starker Rauch- und Rußentwicklung. Dabei entstehen Ascherückstände, die u.U. die feinen Durchgangskanäle des Monolithen verstopfen können.

Die Rauch- und Rußentwicklung spielt bei der Erstausrüstung nur eine untergeordnete Rolle. Störender ist sie dagegen beim Austausch defekter Abgasanlagen. Wird beispielsweise gleich im Anschluß an den Austausch eine Abgasprüfung vorgenommen wird, kann dies im Extremfall dazu führen, daß die während des Verbrennens des Papprings entstehenden Emissionen trotz neuem Abgaskatalysator zu einem negativen Prüfergebnis führen.

Ein weiteres Problem tritt bei der Rohrbauweise von Abgaskatalysatoren auf. Hier wird eine aus zwei oder mehr Monolithen bestehende, gegebenenfalls durch eine Schrumpffolie zusammengehaltene und von einer Lagerungsmatte umhüllte Baueinheit in einen Rohrabschnitt eingepreßt. Aufgrund der Reibung zwischen Lagerungsmatte und Rohrabschnitt-Innenwand sind relativ hohe Einpreßkräfte aufzuwenden. Ein aus Pappe bestehender Abstandsring müßte eine relativ hohe Wandstärke aufweisen, um der auf ihn einwirkenden Einpreßkraft standhalten zu können. Aufgrund der hohen Einpreßkräfte wird der Pappring mit einer relativ hohen Flächenpressung an die Stirnfläche der Monolithen gedrückt. Dies kann u.U. zu einer Beschädigung der Monolithe führen. Der Erhöhung der Wandstärke des Papperings, um die Flächenpressung zu verringern, sind jedoch Grenzen gesetzt, weil die Masse an zu verbrennendem Pappkarton relativ gering gehalten werden muß. Größere Pappmengen würden zu einer Erhöhung der Rauch- und Rußentwicklung sowie der zu einer Zunahme der Gefahr führen, daß Feststoff-Rückstände die Durchgangskanäle der Monolithen verstopfen. Dies ist insbesondere dann der Fall, wenn stabile, holzreiche Pappe verwendet wird. Schließlich darf der Abstandsring auch deshalb nicht zu stark gewählt werden, weil der Strömungsquerschnitt der Abgasanlage unzulässig beschränkt würde, was den Ausfall der Anlage zur Folge haben könnte.

Ausgehend von dieser Problematik wird ein Herstellungsverfahren für einen Abgaskatalysator vorgeschlagen, bei dem zur Festlegung bzw. Einhaltung des Axialabstands zwischen den Monolithen ein Abstandshalter angeordnet ist, der von einem bei Raumtemperatur festen Zustand in einen flüssigen-, gas- oder dampfförmigen Zustand praktisch rückstandsfrei umwandelbar ist. Mit Zustand ist dabei insbesondere der Aggregatzustand eines Stoffes oder Stoffgemisches gemeint. Für den Abstandshalter kommen Stoffe oder Stoffgemische infrage, die durch Abkühlung auf unterhalb der Raumtemperatur liegende Temperaturen in einen festen Zustand überführt wurden und die sich vorzugsweise bei Raumtemperatur entweder verflüssigen oder verflüchtigen. Die Umwandlung kann aber auch bei höheren Temperaturen erfolgen, sofern diese unterhalb der Betriebstemperatur des Abgaskatalysators liegt, d.h. jener Temperatur, die beim Betrieb des Abgaskatalysators in jedem Fall - auch unter Schwachlastbedingungen - erreicht wird.

Eine besonders vorteilhafte Ausgestaltung des erfindungsgemäßen Verfahrens ist in Anspruch 3 genannt. Das Wasser wird durch einen üblichen Gefrierprozeß in den Aggregatszustand Eis überführt. Der Abstandshalter kann jedoch gemäß Anspruch 4 auch aus Trockeneis, also festem Kohlendioxid bestehen. Es ist auch denkbar, daß der Abstandshalter aus einem Stoff bzw. Stoffgemisch besteht, das durch Absenkung des Druckes in einen dampf- oder glasförmigen Zustand umwandelbar ist. Eine solche Druckverringerung wäre auch anwendbar, um die Umwandlung von Stoffen oder Stoffgemischen mit höheren Umwandlungstemperaturen zu unterstützen. Vorzugsweise ist der Abstandhalter scheibenförmig ausgebildet. Dadurch ist die Flächenpressung auf die Stirnseiten der Monolithe verringert. Eine scheibenförmige Ausbildung des Abstandshalters ist jedoch nur in dem Fall möglich, daß die Umwandlung bereits bei Raumtemperatur erfolgt, so daß der Strömungsquerschnitt des Abgaskatalysators beim ersten Anlassen des Motors nicht blockiert ist. Andernfalls muß der Abstandshalter wie in Anspruch 6 angegeben, ringförmig ausgebildet sein. Diese ringförmige Ausbildung ist jedoch auch denkbar, wenn Katalysatoren der Wickel- und Halbschalenbauweise hergestellt werden, bei denen, bedingt durch das Herstellungsverfahren, in Axialrichtung praktisch keine Kräfte auf den Abstandsring bzw. die an den Ring stoßenden Stirnflächen der Monolithe einwirken.

Die Erfindung wird im folgenden anhand eines Ausführungsbeispiels näher erläutert. Es zeigen:
- Fig.1: einen mit dem erfindungsgemäßen Verfahren hergestellten Abgaskatalysator und

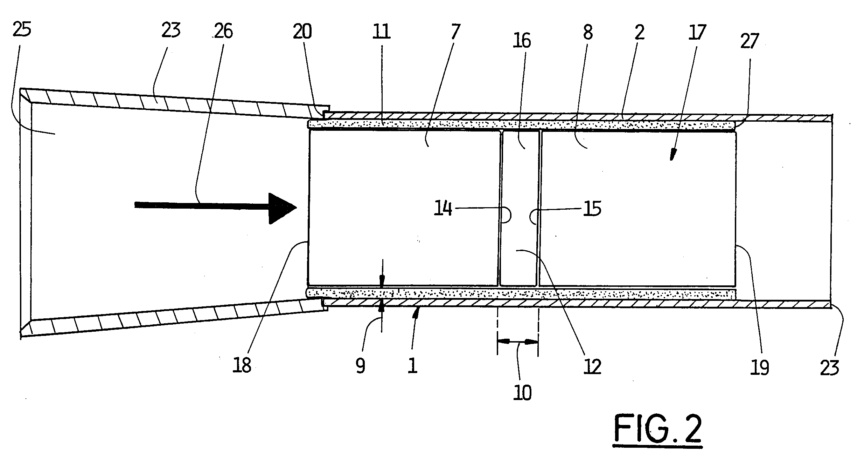

- Fig.2: in schematischer Darstellung den Verfahrensschritt des Einpressens einer aus zwei Monolithen bestehenden Baueinheit in einen, das Katalysator Grundgehäuse bildenden Rohrabschnitt.

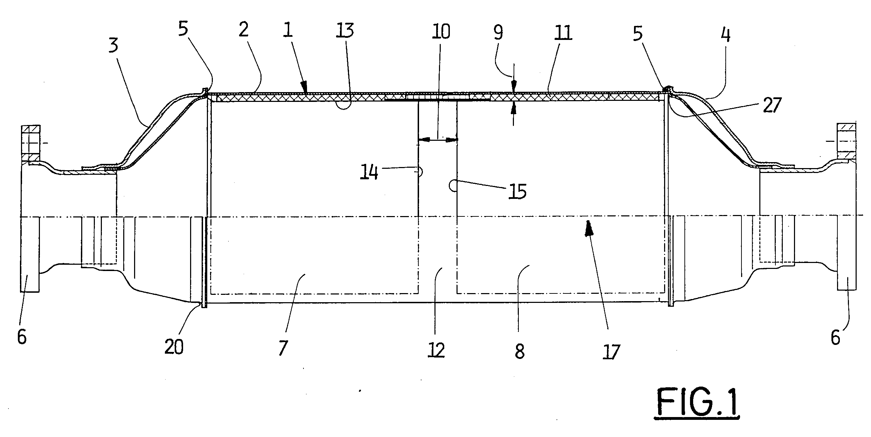

Zunächst sei anhand von Fig.1 der grundsätzliche Aufbau eines zwei Monolithen enthaltenden Katalysators beschrieben. Das Gehäuse 1 des Abgaskatalysators besteht aus einem Rohrabschnitt 2 und jeweils einem an die Stirnseite des Rohrabschnitts stumpf angesetzten Ein- bzw. Ausströmtrichters 3,4. Die Trichter 3,4 sind mittels einer Hohlkehlschweißnaht 5 mit dem Rohrabschnitt 2 verbunden. An ihrem stromaufwärts bzw. stromabwärts gelegenen Ende tragen sie jeweils einen Befestigungsflansch 6. Im Rohrabschnitt 2 sind zwei Monolithe 7,8 so angeordnet, daß zwischen ihrer Umfangsfläche und der Innenwandung des Rohrabschnitts 2 ein Spaltraum 9 vorhanden ist. In diesen Spaltraum 9 ist mit Vorpressung eine Lagerungsmatte eingelegt. Diese kann beispielsweise eine Blähglimmer enthaltende Quellmatte sein. Die beiden Monolithe 7,8 sind mit Axialabstand 10 zueinander angeordnet. Zwischen den beiden Monolithen 7,8 befindet sich also ein etwa scheibenförmiger Zwischenraum 12. Damit die Lagerungsmatte 11 nicht in den Zwischenraum 12 eindringen kann, ist dieser mit einem Drahtgewebe 13 abgedeckt.

Das erfindungsgemäße Verfahren wird nun exemplarisch für einen Abgaskatalysator in Rohrbauweise beschrieben. Zunächst wird eine aus zwei Monolithen 7,8, einem zwischen den einander zugewandten Stirnseiten 14,15 angeordneten Abstandshalter 16 und einer Lagerungsmatte 11 bestehende Einschubeinheit 17 vorgefertigt. Dabei werden die beiden Monolithe 7,8 und der sich zwischen ihnen befindliche Abstandshalter 16 in eine Schrumpffolie eingeschweißt. Die vom Abstandshalter 16 wegweisenden Stirnflächen 18 und 19 der Monolithe 7,8 bleiben dabei jedoch frei. Um die Umfangsfläche der so erhaltenen Einheit wird sodann eine entsprechend zugeschnitte Bahn einer Lagerungsmatte gelegt und die nun vervollständigte Einschubeinheit 17 in einen entsprechend bemessenen Rohrabschnitt 2 eingeschoben. Dazu wird auf die eine Stirnseite 20 des Rohrabschnitts ein Einführtrichter 21 aufgesetzt. Die Einschubeinheit 17 wird sodann in die Öffnung 25 des Einführtrichters 23 eingeführt und durch Beaufschlagung in Richtung des Pfeiles 26 in den Rohrabschnitt 2 eingepreßt. Der Axialabstand 10 bzw. der Spaltraum 12 zwischen den beiden Monolithen 7,8 wird durch den Abstandshalter 16 freigehalten. Der Abstandshalter 16 ist eine entsprechend der Umrißform der Monolithe ausgebildete Scheibe aus Eis, die beispielsweise durch Absägen von einem Eis-Vollzylinder erhalten werden kann. Die Montage bzw. das Einführen der Einschubeinheit 17 in den Rohrabschnitt 2 geht so schnell vor sich, daß dabei der Volumenschwund durch oberflächliches Schmelzen der Eisscheibe vernachlässigbar gering ist. Dieser Schwund kann aber auch durch eine entsprechende Überdimensionierung der Scheibe berücksichtigt werden. Zum Einpressen der Einschubeinheit 17 wird vorzugsweise ein Hydraulikzylinder verwendet. Nach dem Einpressen der Einschubeinheit 17 wird die Stirnseite 22 des Rohrabschnitts 2 mit einem Einströmtrichter 3, und die andere Stirnseite 26 mit einem Ausströmtrichter verbunden.

Die den Abstandshalter 16 bildende Eisscheibe verflüssigt sich bereits nach kurzer Zeit, so daß der Strömungsquerschnitt der Monolithe freigegeben ist. Das sich im Spaltraum 13 ansammelnde Wasser verdampft, sobald der Abgaskatalysator durch die heißen Abgase erwärmt wird.

Der Abstandshalter 16 kann auch aus Trockenes hergestellt sein. Allerdings sublimiert das Kohlendioxid relativ schnell, so daß ein gegenüber Eis erhöhter Volumenschwund vorhanden ist. Auch ist die mechanische Stabilität von Trockeneisscheiben geringer als die von Eis. Dies kann aber durch eine entsprechende Pressung des Trockeneises ausgeglichen werden.

Neben Eis und Trockeneis kommen auch noch weitere Stoffe bzw. Stoffgemische infrage. Diese Stoffe können auch bei höherer Temperatur in einen flüssigen-, gas- oder dampfförmigen Zustand übergehen. In diesem Falle muß der Abstandshalter in Form eines Ringes ausgebildet sein, damit die Monolithe von Abgas durchströmt werden können. Auch kann in diesen Fällen die Umwandlung des Abstandshalters durch Druckverringerung unterstützt werden.

### Bezugszeichenliste

- 1: Gehäuse
- 2: Rohrabschnitt
- 3: Einströmtrichter
- 4: Ausströmtrichter
- 5: Hohlkehlschweißnaht
- 6: Befestigungsflansch
- 7: Monolith
- 8: Monolith
- 9: Spaltraum
- 10: Axialabstand
- 11: Lagerungsmatte
- 12: Zwischenraum
- 13: Drahtgewebe
- 14: Stirnseite
- 15: Stirnseite
- 16: Abstandshalter
- 17: Einschubeinheit
- 18: Stirnfläche
- 19: Stirnfläche
- 20: Stirnseite
- 21: Einführtrichter
- 25: Öffnung
- 26: Pfeil
- 27: Stirnseite

## Patentansprüche

1. Verfahren zum Herstellen eines Abgaskatalysators, mit einem Gehäuse mit mehreren darin mit Axialabstand zueinander angeordneten Monolithen (7,8) und einer zwischen den Monolithen und der Gehäuse-Innenwandung angeordneten Lagerungsmatte (11), wobei zur Festlegung bzw. Einhaltung des Axialabstands zwischen den Monolithen (7,8) ein Abstandshalter (16) angeordnet ist,
dadurch gekennzeichnet,
daß der Abstandshalter von einem bei Raumtemperatur festen Zustand in einen flüssigen, gas- oder dampfförmigen Zustand umwandelbar ist.

2. Verfahren nach Anspruch 1,
dadurch gekennzeichnet,
daß der Abstandshalter (16) aus einem Stoff oder Stoffgemisch besteht, dessen Umwandlungstemperatur unterhalb der Betriebstemperatur des Abgaskatalysators liegt.

3. Verfahren nach Anspruch 2,
dadurch gekennzeichnet,
daß der Stoff Eis ist.

4. Verfahren nach Anspruch 2,
dadurch gekennzeichnet,
daß der Stoff Trockeneis ist.

5. Verfahren nach Anspruch 1,
dadurch gekennzeichnet,
daß der Abstandshalter (16) aus einem durch Druckverringerung umwandelbaren Stoff oder Stoffgemisch besteht.

6. Verfahren nach einem der Ansprüche 1 bis 5,
dadurch gekennzeichnet,
daß der Abstandshalter (16) scheibenförmig ist.

7. Verfahren nach einem der Ansprüche 1 bis 4,
dadurch gekennzeichnet,
daß der Abstandshalter (16) ringförmig ist.
